# EUROPEAN PATENT SPECIFICATION

(11) **EP 4 517 567 B1**
(45) Date of publication and mention of the grant of the patent: **29.04.2026**
(21) Application number: 24197425.2
(22) Date of filing: 29.08.2024
(51) Int. Cl.: G06F 21/44, G06F 21/57

(54) **SYNTHETIC SENSOR VALIDATION FOR DEPLOYMENT IN VEHICLES**
SYNTHETISCHE SENSORVALIDIERUNG ZUM EINSATZ IN FAHRZEUGEN
VALIDATION DE CAPTEUR SYNTHÉTIQUE POUR DÉPLOIEMENT DANS DES VÉHICULES

(30) Priority: 01.09.2023 US 202363536209 P
(43) Date of publication of application: 05.03.2025
(73) Proprietor: BlackBerry Limited, Waterloo, Ontario N2K 0A7 (CA)
(72) Inventor: BLAIS, Pierre Pierre, Waterloo, ON, N2K 0A7 (CA)
(74) Representative: MERH-IP Matias Erny Reichl Hoffmann Patentanwälte PartG mbB

(56) References cited:
- US-A1- 2018 150 372
- ERWIN ROTH ET AL: "ANALYSIS AND VALIDATION OF PERCEPTION SENSOR MODELS IN AN INTEGRATED VEHICLE AND ENVIRONMENT SIMULATION", 29 April 2011 (2011-04-29), XP055677990, Retrieved from the Internet <URL:https://mediatum.ub.tum.de/doc/1287190/426874.pdf> [retrieved on 20200319]

## Description

### FIELD OF THE DISCLOSURE

The present disclosure relates to a method of operating applications on a vehicle. More specifically, the present disclosure relates to a method for validating, prior to installation, the signal semantics received by an application during operation.

### BACKGROUND

The background description includes information that may be useful in understanding the present inventive subject matter. It is not an admission that any of the information provided herein is prior art or applicant admitted prior art, or relevant to the presently claimed inventive subject matter, or that any publication specifically or implicitly referenced is prior art or applicant admitted prior art.

Modern vehicles have many sensors, including physical sensors and synthetic sensors. Physical sensors are devices that obtain direct measurements from their environment, such as, without limitation, temperature, pressure, speed, and the like. Synthetic sensors are applications (software modules) that obtain information from other sensors, whether physical or synthetic, to produce an "insight". In this context, the term "insight" denotes a useful piece of information derived from one or multiple sources of information (such as vehicle signals from physical vehicle sensors).

When synthetic sensors are used in a vehicle, the synthetic sensors may fail if they receive data with unexpected semantics. For example, a synthetic sensor expecting a speed value to be expressed in kilometers per hour (km/h) will not function properly if it receives data expressed in miles per hour (mph).
US 2018/150372 A1 discloses a sled to generate manifest data indicative of one or more characteristics of the sled. The sled is also to associate an identifier with the manifest data to uniquely identifies the sled from other sleds. Additionally, the sled is to send the manifest data and the associated identifier to a server. The sled may also detect a change in the hardware resources, firmware resources, the configuration, or component health of the sled. The sled may also generate an update of the manifest data based on the detected change, where the update specifies the detected change in the hardware resources, firmware resources, the configuration, or component health of the sled. The sled may also send the update of the manifest data to the server.

### SUMMARY

The invention is as defined in the appended set of claims. According to at least one embodiment of the present disclosure, there is provided a method according to claim 1.

According to at least another embodiment of the present disclosure, there is provided a computing device according to claim 7.

According to yet another embodiment of the present disclosure, there is provided a computer readable medium according to claim 8.

### BRIEF DESCRIPTION OF THE DRAWINGS

The present disclosure will be better understood having regard to the drawings in which:
**Figure 1** is graphical representation of a signal catalog as a tree structure, according to at least one embodiment of the present disclosure.
**Figure 2** is a graphical representation of a signal being converted between different applications according to at least one embodiment of the present disclosure.
**Figure 3** is a graphical representation of a process for creating an enhanced signal catalog from an original signal catalog according to at least one embodiment of the present disclosure.
**Figure 4** is a graphical representation of a process for converting signals at a signal connector according to at least one embodiment of the present disclosure.
**Figure 5** is a graphical representation of a process for enhancing a synthetic sensor manifest according to at least one embodiment of the present disclosure.
**Figure 6** is a graphical representation of a process for validating an enhanced synthetic sensor manifest against a signal catalog according to at least one embodiment of the present disclosure.
**Figure 7** is a block diagram of a method for validating an application according to at least one embodiment of the present disclosure.
**Figure 8** is a block diagram of a method for validating an application according to at least one embodiment of the present disclosure.
**Figure 9** is a block diagram of a simplified computing device capable of being used with the embodiments of the present disclosure.

### DETAILED DESCRIPTION OF THE DRAWINGS

The present disclosure is directed to a method for validating that a synthetic sensor will receive appropriately normalized data once deployed in a vehicle. The validation may be performed prior to deployment, thereby facilitating the development process for synthetic sensors.

For the purposes of this disclosure, the following terminology will be used.

"Signal Catalog": The set of signals used in a vehicle. The signal catalog is expressed as a tree structure, according to the Connected VEhicle Systems Alliance (COVESA) Vehicle Signal Specification (VSS).

"Node Path Name": The name of a node, in the form of the path to the node. The node path name comprises the name of each node in the path from the root of the tree to the node in question, separated by periods. For example, Vehicle.Speed is a node path name with Vehicle being the root node and Speed being a data node directly connected to the root node.

"EUUID": An extended UUID. The VSS assigns Universally Unique IDentifiers (UUIDs) to each node based on their path names. These UUIDs are extended to create EUUIDs, to include semantics information for the node.

"Signal Catalog Provenance": Information indicating where the signal catalog originated. For example, a catalog may originate from COVESA, from vehicle manufacturers (OEM), or from other providers.

"Signal Catalog Version": A number or set of numbers indicating a version of a signal catalog. Along with the signal catalog provenance, a signal catalog version uniquely identifies a signal catalog.

"Signal Service": A service running within an Electric Control Unit (ECU) of a vehicle, responsible for managing the signals within a vehicle, access to those signals, and the signal catalog.

"Fleet Management System" (FMS): An OEM software infrastructure used to manage vehicles, vehicle models, vehicle types, and the like.

"Fleet Manager": A human actor that uses the FMS to manage fleets of vehicles.

"Synthetic Sensor": An application that synthesizes an insight from a set of signals available in a vehicle. In some cases, a synthetic sensor may use machine learning models to do the synthesis.

"Application": A software module that obtains signals from the signal service. A synthetic sensor is a type of application.

"Insight": A synthetized signal created by a synthetic sensor based on received signals.

"Signal Definition": Information on a signal from a signal catalog, including the path of the node that produces the signal and VSS elements describing the signal (such as description, type, datatype, unit, allowed values, etc.).

"Signal Semantic": The portion of a signal definition that relates to semantics of a signal. For example, the datatype, and unit, needed to properly interpret a signal programmatically.

Development of in-vehicle applications is made more complicated by a lack of standardization of how vehicle data sources and signals are to be consumed. For example, a synthetic sensor that is designed to work with a signal definition from a specific version of a signal catalog of a given origin may not work properly with a different version of a signal catalog, or with a signal catalog of different provenance if the signal definition in the other signal catalog is semantically different. It is inefficient for an application to check the signal catalog provenance and signal catalog version for each signal it processes, and then adapt to that particular signal catalog.

Moreover, there is a need to ensure that only secure access to signals is provided.

The present disclosure provides a solution to the above problems by leveraging EUUIDs. EUUIDs are built on top of COVESA's VSS and allow for quickly identifying semantic differences between signals, and efficiently validating applications.

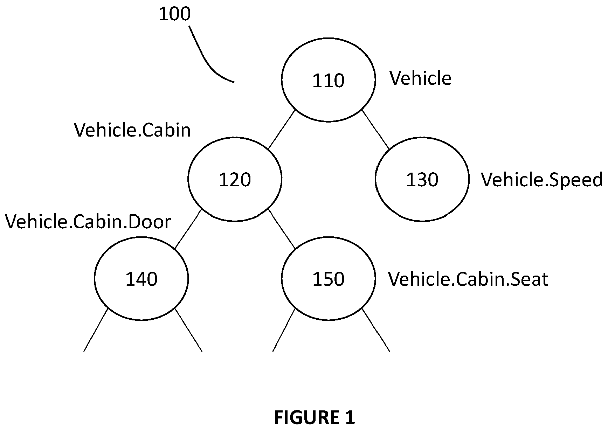

Reference is now made to **Figure 1****,** in which a portion of a signal catalog is illustrated.

As seen in **Figure 1****,** a catalog **100** defined according to the VSS includes a root node **110,** named Vehicle. For the sake of simplicity, only two nodes are shown to be children of root node **110,** namely Vehicle.Cabin **120** and Vehicle.Speed **130.** Vehicle.Cabin 120 is further shown as having two children, namely Vehicle. Cabin. Door **140** and Vehicle. Cabin. Seat **150.** Other nodes are omitted for simplicity.

In this example, Vehicle.Speed **120** is a data node, describing a signal representing a vehicle's speed, while all the other nodes are branch nodes. Vehicle.Speed **120** may have a JSON representation as follows:

```
 "Speed": {
     "datatype": "float",
     "description": "Vehicle speed.",
     "type": "sensor",
     "unit": "km/h",
     "uuid": "efe50798638d55fab18ab7d43cc490e9",
     "x-euuid": "86e92e0ee67d30dd",
     "x-read-permission": "Vehicle. Speed. READ"
     }
```

As seen from the above, the JSON representation of Vehicle. Speed **120** comprises a datatype which is a floating point, a description as "Vehicle speed", a type as "sensor", and a unit as "km/h". The JSON representation further includes a UUID, an EUUID, and a read permission.

The permission, labeled "x-read-permission", allows for controlling which application has read access to signals from the node. For example, some nodes may provide signals containing personal identity information, for example a Vehicle Identification Number (VIN). Therefore, according to at least some embodiments of the present disclosure, each node may have associated therewith a read permission, indicating which applications have the permission to receive signal values from that node. According to at least some embodiments of the present disclosure, each writable node may have associated therewith a write permission, indication which applications have the permission to write signal values to the node.

According to at least some embodiments of the present disclosure, a node inherits the permissions of its parent node, unless the node has an explicit permission set. This may be implemented, for example, by the following JSON representation in a Permissions File (320), which is provided as a non-limiting example:

```
 "x-read-permission": [
     {
        "permission": "Vehicle.READ",
        "nodes": [
        "Vehicle"
        ]
     }
     {
        "permission": "Vehicle.PII.READ",
        "nodes": [
        "Vehicle. Vehicle Identification",
           "Vehicle.Driver.Identifier"
        ]
     }
     ]
```

In the above example, Vehicle. READ is defined for the Vehicle node, which is the root node. In order to have access to any signal from any node that inherited this permission from the Vehicle node, the client is required to have been granted Vehicle. READ permission.

The above example further includes the Vehicle.PII.READ permission, which is defined for the Vehicle.Vehicleldentification node and the Vehicle. Driver. Identifier node. In this case, in order to have access to these nodes, or any of their children nodes, a client needs to have been granted the Vehicle.Pll.READ permission. Although these nodes are children of the Vehicle node, they do not inherit the Vehicle. READ permission as they have been assigned their own read permission in the permissions file. Other children nodes who have not been assigned their own read permission inherit their permission from their parent node.

A similar mechanism as described above may be used to provide write permissions.

In general terms, when a permission is defined for a given node, clients will need to be granted that permission in order to read or write to the given node or the given node's children.

According to at least some embodiments of the present disclosure, nodes are assigned EUUIDs. EUUIDs uniquely identify a node from a specific signal catalog of a given version and of a given provenance. Therefore, each EUUID is unique and uniquely identifies a node with its particular semantic information.

According to at least some embodiments of the present disclosure, the EUUID for a given node may be created by a hash function of a VSS signal definition of the node, including the node path name and semantically relevant elements defining the signal. As a non-limiting example, the semantically relevant elements may comprise the type (whether the node is a branch, sensor, actuator, or attribute), the data type (unsigned integer, integer, floating point, double, string, etc.), the unit of the values in the signal (for example, km/h, mph, degrees Celsius, etc.), a minimum value, a maximum value, or a set of restricted values the signal may take.

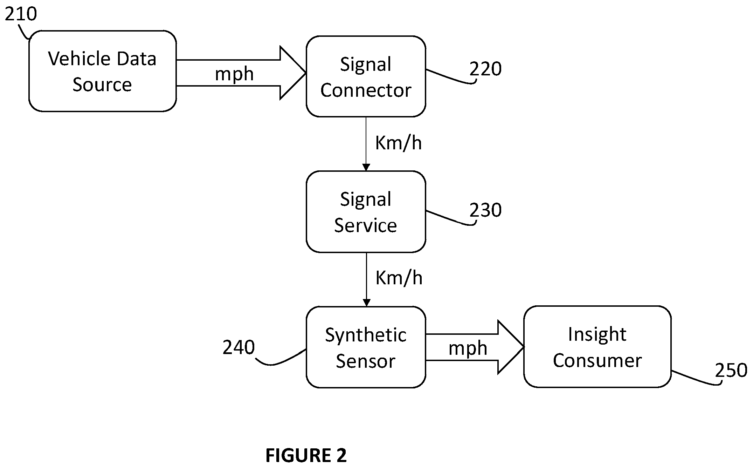

Reference is now made to **Figure 2** as other illustrative examples for better understanding the present invention, which illustrates a problem with prior art systems not covered by the appended claims. As seen in **Figure 2****,** a vehicle data source **210** reports a signal in mph. An application is interested in this signal and also expects the value of the signal to be expressed in mph. This signal is received by signal connector **220,** which then normalizes the signal to km/h before passing it on to the signal service **230.** The signal service **230** then passes the signal to a synthetic sensor **240,** which then converts the value back to mph for the application **250.**

As can be appreciated converting mph to km/h and then back to mph is inefficient, and may introduce rounding errors. In at least some embodiments of the present disclosure, it would be preferable to have the original signal from the data source **210** be carried through the signal service **230** in the unit that is expected by the synthetic sensor **240,** avoiding the dual conversions.

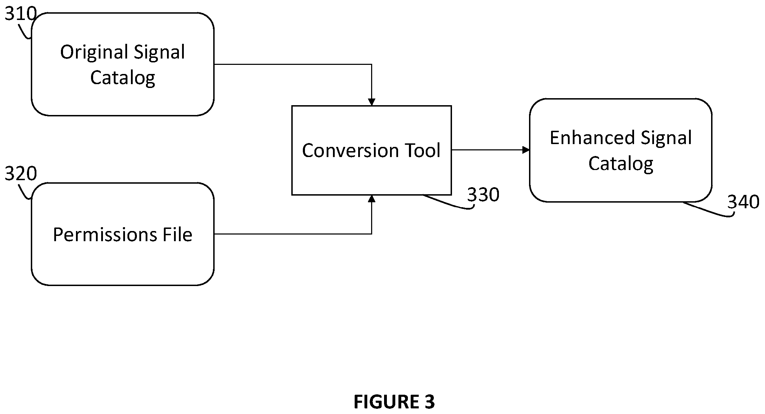

Reference is now made to **Figure 3****.** As seen in **Figure 3****,** an original signal catalog **310** is combined with a permissions file **320** in a conversion tool **330** to produce an enhanced signal catalog **340.** Specifically, for each node in the original signal catalog **310,** an EUUID is created, and the new node with the EUUID is added to the enhanced signal catalog **340.** According to at least one embodiment of the present disclosure, the EUUID is created by a hash of the node path name and semantic information for the node. In at least some embodiments, the hash is a 64-bit hash.

Notably, this means that if a node from a first signal catalog has the same path name and the same semantics as a node from a second signal catalog, both nodes will have the same EUUID. This implies that unless a node has changed semantics between two different signal catalogs, it will produce the same EUUID.

According to at least some embodiments of the present disclosure, the enhanced signal catalog may further comprise permissions for each node. The permission information may be provided in the permissions file **320,** as illustrated in **Figure 3****.** For example, the permissions file **320** may include JSON representations of permissions, as discussed above, and this may be used by conversion tool **330** to add the requisite permissions elements to each node.

The above may be illustrated based on the following example, where the following JSON snippet represents a node in the original signal catalog **310:**

```
 "Speed": {
     "datatype": "float",
     "description": "Vehicle speed.",
     "type": "sensor",
     "unit": "km/h",
     "uuid": "efe50798638d55fab18ab7d43cc490e9"
```

After conversion by the conversion tool **330,** the corresponding node in the enhanced signal catalog **340** will be as follows:

```
 "Speed": {
     "datatype": "float",
     "description": "Vehicle speed.",
     "type": "sensor",
     "unit": "km/h",
     "uuid": "efe50798638d55fab18ab7d43cc490e9",
     "x-euuid": "86e92e0ee67d30dd",
     "x-read-permission": "Vehicle. Speed. READ"
```

As can be seen, the corresponding node in the enhanced catalog **340** is changed with respect to the original node, in that it includes the elements "x-euuid" and "x-read-permission". The EUUID element is created based on a hash of the node path name, which in this case would be Vehicle.Speed, and the semantics information, which in this case includes the datatype, the type, and the unit. The permission element is based on the contents of the permissions file.

EUUIDs may be used to uniquely identify signal definitions and semantics across different provenances and versions of the signal catalog, and validate that a received signal matches its expected semantics.

Specifically, an application making use of the value of a signal needs to know a priori the exact definition of a signal. The EUUID simplifies the process for this verification.

For example, the semantic information for a node may change over time, based on provenance or version of a signal catalog. In one scenario, an Original Equipment Manufacturer (OEM) manufacturing vehicles in the United States could employ a sensor that reports vehicle speed in mph. However, if the signal catalog is based on VSS, the vehicle speed will need to be converted to km/h to match the VSS semantics.

The OEM applications and synthetic sensors will also presumably be using mph units, and therefore there is a need to convert the value back from km/h to mph, as illustrated above with respect to **Figure 2****.**

This situation may be avoided by changing the definition of the Vehicle.Speed node in the signal catalog used by the OEM to use mph instead of km/h.

However, in that case, a third-party synthetic sensor designed based on VSS, installed on one such vehicle in which the signal catalog has been modified will receive data in mph when it expects km/h, leading to potentially undetected errors. With EUUIDs, because of the difference in semantics (unit of mph instead of km/h), the EUUID generated for the Vehicle.Speed node based on VSS would differ from the one generated for the OEM signal catalog.

Therefore, the use of EUUIDs provides a convenient mechanism for validating that the expected signals match those that are being received. While the above is illustrated with respect to the Vehicle.Speed node, the same verification could be performed for every data node of the signal catalog.

Without EUUIDs, the validation of the application may be performed by comparing each element of each signal definition of a reference signal catalog with the corresponding elements in a signal catalog against which the application is being validated. However, this is a costly and time-consuming operation. By taking advantage of the semantic information encoded in the EUUID, the validation is greatly simplified, as described in detail below.

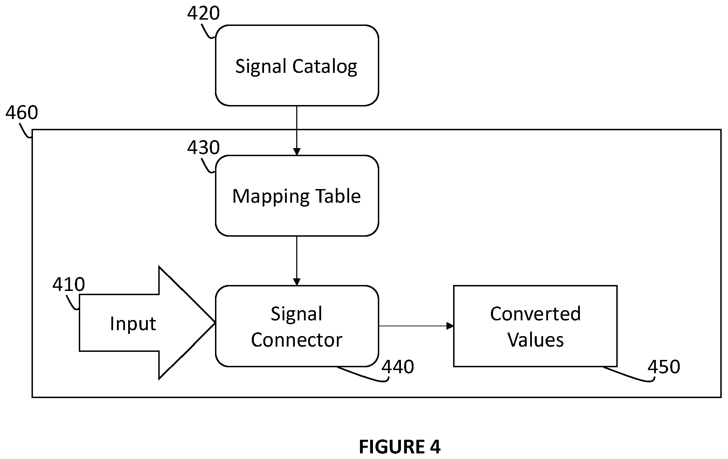

Reference is now made to **Figure 4** as other illustrative examples for better understanding the present invention which are not covered by the appended claims, illustrating how a signal connector may use EUUIDs when normalizing signal values in a vehicle **460.**

As seen in **Figure 4****,** input data **410** is received at the signal connector **440.** Input data represents signals reported by various data sources in the vehicles, such as sensors. According to at least one embodiment, the input data maybe organized in tuples of (SigID, Value), where SigID represents an identifier of the data source specific to the vehicle manufacturer and the Value is the value being reported.

The signal connector **440** uses a mapping table **430,** created from the OEM signal catalog **420,** to convert the input tuples as output tuples of (EUUID, F(Value)), where the EUUID is the EUUID corresponding to SigID and F(Value) is the received value transformed by function F, where F normalizes the value into the semantics defined by the vehicle's signal catalog. In some cases, no conversion is required and F(x)=x. However, in other cases, a conversion is required and, in those cases, F is selected to perform the appropriate conversion.

The functions F may normalize any type of value being received to any other type of value being expected by an application. For example, in some cases, a signal representing a value in mph is converted to the value in km/h. Alternatively, or additionally, a signal expressed as an integer may be converted to a floating point. Other possibilities exist and are contemplated to be within the scope of the present disclosure.

Specifically, mapping table **430** comprises a plurality of mappings between SigIDs, EUUIDs, and functions F. Upon receiving a tuple (SigID, Value) from a data source, the mapping table is used to find the EUUID corresponding to the received SigID, and a function F. As discussed above, function F may perform one or a series of transformations to the received Value. Then, the signal connector **440** reports the tuple (EUUID, F(Value)) to the signal service, which may then report it to a synthetic sensor, and ultimately, to an insight consumer, as illustrated in **Figure 2****,** discussed above.

According to one non-limiting embodiment, the SigID may be a node path name, a UUID, or an EUUID. When the tuple (SigID, Value) is received, the SigID may be converted to an EUUID if needed, by looking up mapping table **430.**

The mapping table is based on information from signal catalog **420.** According to at least some embodiments, this information may comprise without limitation, node path names, EUUIDs, and semantics information, as described above.

In some embodiments, signal catalog **420** may be distinct from the signal catalog used by the signal service to which signal connector **440** is connected. This would be the case, for example, when a third-party supplier to a vehicle manufacturer provides a signal connector based on their own signal catalog, which has a different provenance or version than the signal catalog used by the vehicle manufacturer. The signal connector may be validated against a signal catalog using the techniques described below.

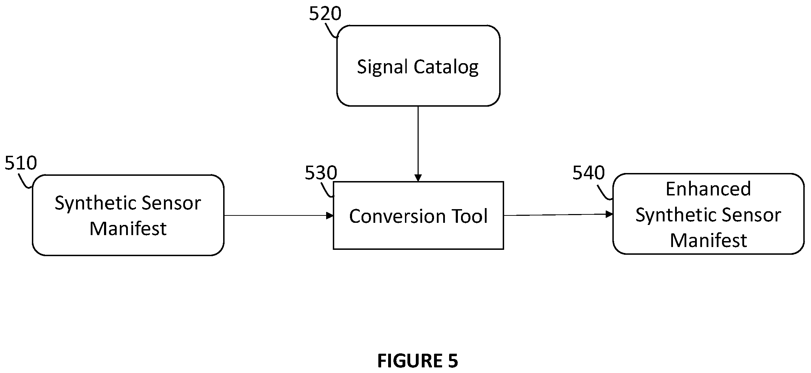

The EUUIDs may also be used to enhance a synthetic sensor manifest, as illustrated in **Figure 5****.** With reference to **Figure 5****,** a synthetic sensor manifest **510** comprises a list of sensors of interest, expressed as node path names. A conversion tool **530** takes as input the sensor manifest **510** and a signal catalog **520.** Signal catalog **520** may comprise information on all the signals in the catalog in JSON format. Conversion tool **530** may then take the node path names from sensor manifest **510,** and for each of them, find the corresponding EUUID from Signal catalog **520.** Conversion tool **530** may then output an enhanced sensor manifest **540,** in which each node path name is associated to the relevant EUUID.

Therefore, conversion tool **530** simplifies the work of application developers by relieving them from having to manually deal with EUUIDs, leaving them instead to work with node path names, which are designed to be human-readable. Thus, a manifest for an application may be initialized with the required node path names, and such node path names are then augmented with the EUUID automatically by conversion tool **530,** generating an enhanced manifest.

Accordingly, a developer of a synthetic sensor may obtain the semantic specification for each signal from the signal catalog and code the synthetic sensor accordingly. The provenance and the version of the signal catalog do not matter as the EUUIDs uniquely correspond to the correct semantic information. Therefore, the synthetic sensor may be deployed "as-is" on any vehicle that supports these EUUIDs.

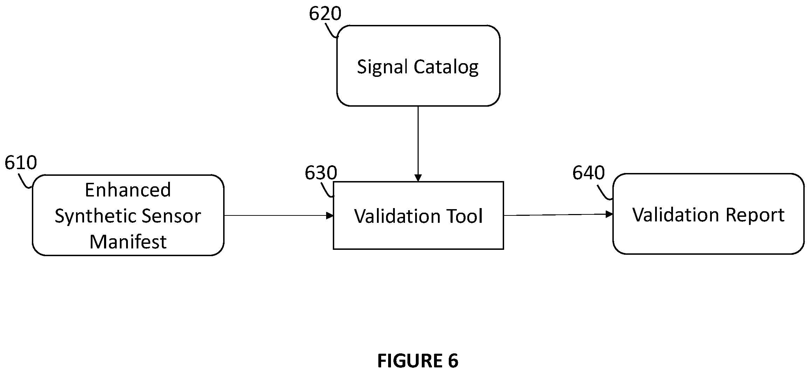

Reference is now made to **Figure 6****,** which illustrates the use of EUUIDs to validate a synthetic sensor manifest against a signal catalog.

As seen in **Figure 6****,** validation tool **630** takes in as input an enhanced synthetic sensor manifest **610,** comprising a list of node path names for sensors of interest, and their corresponding EUUIDs. The enhanced synthetic sensor manifest **610** may have been created based on the process illustrated in **Figure 5****,** discussed above.

The validation tool **630** further takes in as input a signal catalog **620.** Signal catalog **620** may correspond for example and without limitation, to an OEM signal catalog created by a vehicle manufacturer and installed on their vehicles. Notably, this signal catalog is typically distinct from the signal catalog used to create the enhanced synthetic sensor manifest **610.**

Validation tool **630** may then compare each EUUID for a given node path name from enhanced synthetic sensor manifest **610** to the EUUID stored in the signal catalog **620** for the same node path name. If both EUUIDs match, this may be indicated in a validation report **640** output by the validation tool **630.** Similarly, if an EUUID is found in the signal catalog **620** for a given path name that does not match the EUUID of the path name from the enhanced synthetic sensor manifest **610,** this may also be indicated in the validation report **640.** In other cases, if no EUUID is found corresponding to the path name from the enhanced synthetic sensor manifest **610,** this may also be indicated in validation report **640.**

According to at least some embodiments, the validation tool **630** may invoke a manifest editing tool (not shown), allowing the application developer to specify whether some signals are optional, or whether some signals may be replaced by others.

From the report **640,** a decision can be made as to whether the synthetic sensor can be installed on a vehicle. Specifically, if validation report **640** indicates that all EUUIDs from the enhanced synthetic sensor manifest are found in the signal catalog **620,** then the synthetic sensor is deployed on a vehicle on which signal catalog **620** is installed. Alternatively, if the validation report indicates some mismatches or missing EUUIDs, the synthetic sensor needs to be modified prior to installation on the vehicle.

This procedure facilitates deployment of synthetic sensors across different platforms without placing an undue burden on developers. Specifically, a developer of a synthetic sensor can ensure that the semantics of the data received from any sensor will match the semantics expected by the synthetic sensor, without having to be concerned of the provenance or version of the signal catalog against which the synthetic sensor was developed or the provenance or version of the signal catalog installed in the vehicle. While the provenance and versions of both these signal catalogs may differ, if the EUUIDs of the sensors of interest match, the synthetic sensor will function correctly.

In cases where the validation indicates that there is a mismatch, many different approaches may be taken in order to remedy the situation.

According to at least one embodiment of the present disclosure, synthetic sensors may be able to convert a signal that uses different semantics to a signal formatted according to the expected semantics, as for example illustrated with respect to **Figure 4****,** discussed above.

According to at least some embodiments, the conversion of signals may comprise converting a signal received in a first unit to a second unit, for example between mph and km/h. The conversion of signals may comprise converting a datatype of the signal to a different data type, for example from floating point to integer or vice versa.

According to at least some embodiments, the synthetic sensor may be modified to deliver useable functionality from a subset of all the signals it would normally require. In this situation, a synthetic sensor has a list of signals that it requires as well as a list of signals it can optionally do without. The list of required sensors and optional sensors may be specified in the enhanced synthetic sensor manifest, and the validation tool discussed above with respect to **Figure 6** may report on which of these sensors is available on a given vehicle.

For example, a synthetic sensor may be able to deliver useable functionality when a signal is missing by instead making use of a number or other signals, combining their values into something meaningful, and replacing the value of the originally required signal.

According to at least some embodiments, the synthetic sensor may be modified to ignore a value that is outside a range of expected values, without reporting an error.

According to at least some embodiments, the synthetic sensor may be modified to use a mechanism such as introspection to request information about signals from the signal service. For example, a synthetic sensor may be modified to function regardless of whether a vehicle speed is reported in mph or km/h, by obtaining the unit being reported from the signal service, and adapting accordingly.

While introspection may be useful in cases such as this, it is an expensive runtime operation to perform and it would be inefficient to perform this check at runtime for every signal the synthetic sensor is interested in, especially given most signals will adhere to the normalization and not vary between signal catalog versions or provenances.

Thus, the use of EUUIDs allow to completely eliminate such runtime checks or to only use such runtime checks in a few isolated situations where the synthetic sensor's EUUID does not match the signal catalog's EUUID or is missing from the signal catalog.

The following is an example of a portion of an enhanced synthetic sensor manifest according to at least one embodiment of the present disclosure:

```
 {
 "EUUIDs": {
  "allOf": [ "EUUID-A",
        { "anyOf': ["EUUID-B", "EUUID-C", "EUUID-D"] },
        { "oneOf": ["EUUID-E", { allOf: ["EUUID-F", "EUUID-G"] } ] }
  ],
  "anyOf": [
   "EUUID-H", "EUUID-I"
  ]
 }
 }
```

In the above example, the required EUUIDs include EUUID-A, one of EUUID-B, EUUID-C, or EUUID-D, and either EUUID-E, or both of EUUID-F and EUUID-G. Furthermore, if EUUID-H or EUUID-I, or both are available, the Synthetic Sensor can provide enhanced service.

Specifically, the first element in the list of EUUIDs is the "allOf" tag, which is used to indicate that all of the listed elements are required. In this case, the required elements are listed as EUUID-A, anyOf: [EUUID-B, EUUID-C, EUUID-D], and oneOf: [EUUID-E, { allOf: ["EUUID-F", "EUUID-G"] } ]. The "anyOf" tag indicates that any one of the listed elements is required, in this case, any of EUUID-B, EUUID-C, and EUUID-D. The "oneOf" tag is used to indicate that only one of the listed elements is required. Based on this syntax, an enhanced synthetic sensor manifest may indicate which combinations of sensors are required and which are optional.

When deployed in a vehicle, a signal catalog can either match the exact set of signals supported by the data connectors in that vehicle, a superset of these signals, or a subset of them. With an exact match, it is easier for synthetic sensors to determine prior to deployment or dynamically at runtime whether a signal is supported in a vehicle. However, requiring an exact match severely hampers the ability to dynamically modify the set of supported signals in a vehicle.

For example, some vehicle services may be offered on a subscription basis. In a non-limiting example, a vehicle may allow its owner to subscribe to a heated-seats service. Upon the owner subscribing to the heated-seats service, the relevant signals become available in the vehicle. This may be implemented in a number of ways.

In one embodiment, a signal may be added indicating whether the subscription has been purchased or not, while the signals representing the heated seats are always present in the signal catalog in the vehicle.

In another embodiment, a separate permission may be assigned to the signals needed by the heated-seats service, and this permission may be granted to the appropriate instances of synthetic sensors.

In yet another embodiment, a new signal catalog comprising the additional signals needed by the heated-seats service could be delivered to the vehicle.

In yet another embodiment, the signal service interrogates the signal connectors with respect to what signals are supported by each signal connector. The signal service could then generate a signal catalog matching the signals supported by the signal connectors. The downside of this approach is that other applications on the vehicle would also need to be validated against this signal catalog in order to be certain that they function properly. In yet another embodiment, the pre-deployed signal catalog already supports the signals needed by the heated-seats service, but reports them as unavailable until a data connector makes them available (after the owner buys the subscription).

Vehicle manufacturers manage fleets of vehicle makes, vehicle models, vehicle trims, as well as versions of these based on year. Managing exact signal catalogs for each set of vehicles or even for individual instances of vehicles may prove unwieldy. For that reason, vehicle manufacturers may wish to maintain a smaller set of signal catalogs, each with a superset of signals corresponding to what any specific vehicle, make, or model may support. Such signal catalogs may be deployed statically in vehicles, along with a mechanism for clients of the signal service to dynamically determine at runtime if a signal is available or not in a vehicle.

According to at least one embodiment, the signal service could dynamically create an exact signal catalog from the set of EUUIDs reported by the set of data connectors, by extracting the related nodes from a superset signal catalog.

Generally, there are four possibilities to consider when comparing the set of signals supported by the data connectors, and the set of signals supported by the signal catalog. In a first case, the two sets are an exact match. In a second case, the set of signals supported by the signal catalog is a superset of signals supported by the data connectors. In a third case, the set of signals supported by the signal catalog is a subset of signals supported by the data connectors. In a fourth case, the set of signals supported by the signal catalog and the set of signals supported by the data connectors are mismatched.

The first case, where the two sets are an exact match, may be achieved either by generating the signal catalog from the EUUIDs supported by the data connectors or by creating a signal catalog that is expected to contain a set of signals and then validating that the set of EUUIDs supported by the set of data connectors is a match.

The second case may be used in situations where vehicle manufacturers want to minimize the number of signal catalogs they have to manage. In this scenario, a single signal catalog with a superset of signals is installed across different vehicles, even if each of these vehicles do not use each signal in the signal catalog.

The third case may create an error situation when some signals supported by the data connectors are not supported in the signal catalog. However, this situation may be useful if a manufacturer wants to limit the set of signals available to synthetic sensors.

The fourth case occurs when the signal catalog contains a superset of signals that are expected to be supported in a vehicle and where the data connectors support a different, but overlapping set. When this occurs, it is generally indicative of an error that is to be remedied.

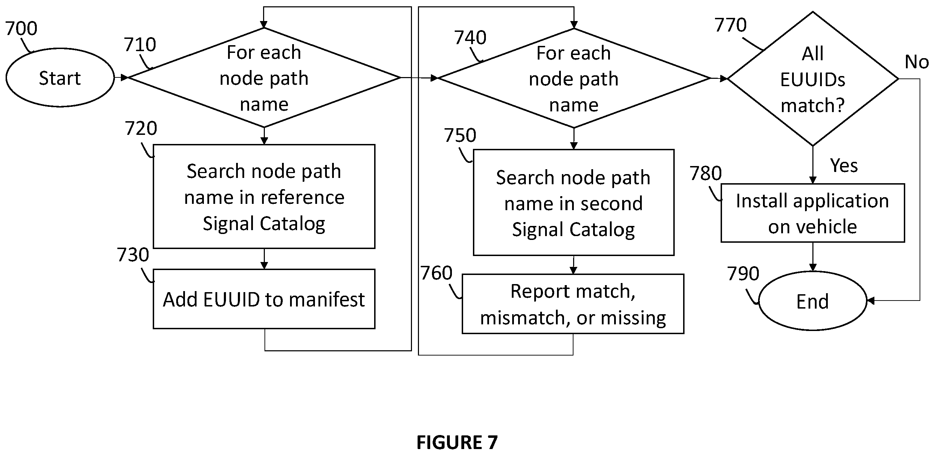

Reference is now made to **Figure 7****,** in which a method for validating an application is illustrated.

The method starts at block **700** and proceeds to block **710** where each node path name in a manifest for an application is processed. The node path names of the manifest represent the signals that the application needs in order to function properly. The method then proceeds to block **720** to search for the node path name in a reference signal catalog. The reference signal catalog is the signal catalog used to develop the application being validated. Upon finding the node path name in the reference signal catalog, a corresponding EUUID is identified.

The method then proceeds to block **730** where the EUUID is added to the manifest for the application, in association with the node path name.

Once all node path names in the application manifest have been processed, the application manifest is an "enhanced application manifest", with an EUUID corresponding to each node path name.

The method then proceeds to block **740** where each node path name in the enhanced manifest is processed. At block **750,** a second signal catalog is searched for the node path name. This second signal catalog may be the signal catalog used by a vehicle on which the application is to be installed. If the node path name is found in the second signal catalog, the EUUID from the second signal catalog is recorded, and compared to the EUUID from the enhanced manifest.

The method then proceeds to block **760,** where the result of block **750** is reported. Either the two EUUIDs match, the two EUUIDs do not match, or the EUUID was not found in the second signal catalog.

Once all node path names have been verified against the second signal catalog, the method proceeds to block **770** to check if all EUUIDs match. If yes, the method proceeds to block **780** where the application is installed on the vehicle. Otherwise, modifications to the application are made prior to installation and the validation method described herein may be repeated with the modified application. The method then ends at block **790.**

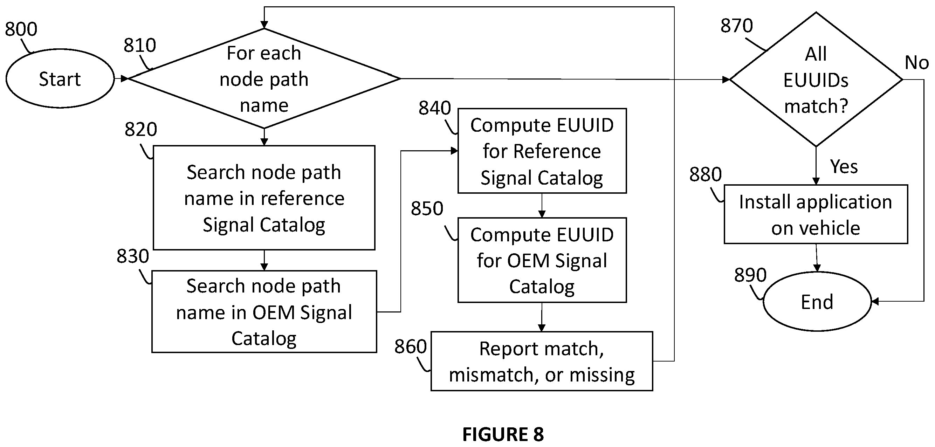

Reference is now made to **Figure 8****,** in which another method for validating an application against a signal catalog is illustrated.

While this method is simpler than the method illustrated in **Figure 7****,** it is suitable when the application developer can provide an OEM with the reference signal catalog used to develop the application. Therefore, to perform the method of **Figure 8****,** one needs a reference signal catalog, an OEM signal catalog, and a list of node path names used by an application. The reference signal catalog is the signal catalog used for developing the application, and the OEM signal catalog is the signal catalog used by an OEM for its vehicles.

In some embodiments, the application manifest may be replaced by a list of signals of interest for the application. This list may be provided through a Graphical User Interface (GUI) according to at least some embodiments.

The method starts at block **800** and proceeds to block **810** where each node path name in a manifest for an application is processed. The method then proceeds to block **820** where a node path name is searched in the reference signal catalog, and then to block **830** where the node path name is searched in the OEM signal catalog.

The method then proceeds to block **840** where the EUUID for the signal catalog is computed and then to block **850** where the EUUID for the OEM signal catalog is computed. In some embodiments, the signal catalogs may already comprise EUUIDs for every signal, and in these cases the EUUID is not recomputed but simply retrieved from the signal catalog.

At block **860,** the two EUUIDs from each signal catalog are compared and the result of the comparison is reported. For example, the comparison may result in a match, in a mismatch, or in a missing EUUID. Optionally, at block **860,** an enhanced application manifest including the EUUID for each signal may also be created.

The method then returns to block **810** if there are more node path names to process, or alternatively, when all node path names have been processed, the method proceeds to block **870,** where it is determined if all pairs of EUUIDs match. If all pairs of EUUIDs match, the application is installed on a vehicle at block **880,** after which the method ends at block **890.** Otherwise, the method ends at block **890.** When the EUUIDs do not match, the application is modified as discussed above and the validation method may then be repeated.

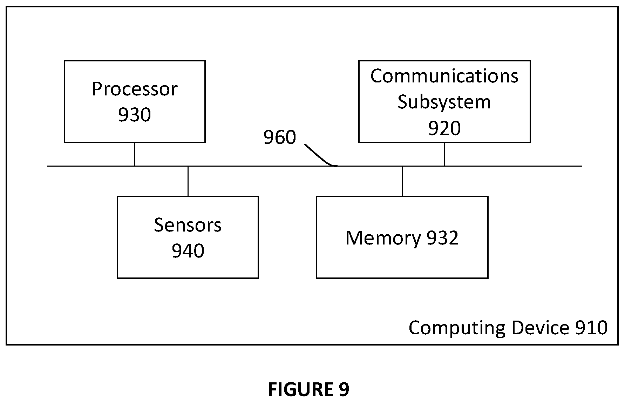

The above may be implemented using any computing device. One simplified diagram of a computing device is shown with regard to **Figure 9****.** The computing device of **Figure 9** could be any fixed or mobile computing device.

In **Figure 9****,** device **910** includes a processor **920** and a communications subsystem **930,** where the processor **920** and communications subsystem **930** cooperate to perform the methods of the embodiments described above. Communications subsystem **930** allows device **910** to communicate with other devices or network elements and may vary based on the type of communication being performed. Further, communications subsystem **930** may comprise a plurality of communications technologies, including any wired or wireless communications technology.

Processor **920** is configured to execute programmable logic, which may be stored, along with data, on device **910,** and shown in the example of **Figure 9** as memory **932.** Memory **932** can be any tangible, non-transitory computer readable storage medium which stores instruction code that, when executed by processor **920** cause device **910** to perform the methods of the present disclosure. The computer readable storage medium may be a tangible or in transitory/non-transitory medium such as optical (e.g., CD, DVD, etc.), magnetic (e.g., tape), flash drive, hard drive, or other memory known in the art.

Alternatively, or in addition to memory **932,** device **910** may access data or programmable logic from an external storage medium, for example through communications subsystem **930.**

In the example of **Figure 9****,** one or more sensors **940** may be associated with the computing device. However, this is optional and in some cases computing device **910** will not be associated with sensors.

Communications between the various elements of device **910** may be through an internal bus **960** in one embodiment. However, other forms of communication are possible.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

While operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be employed. Moreover, the separation of various system components in the implementation descried above should not be understood as requiring such separation in all implementations, and it should be understood that the described program components and systems can generally be integrated together in a single software product or packaged into multiple software products.

Also, techniques, systems, subsystems, and methods described and illustrated in the various implementations as discrete or separate may be combined or integrated with other systems, modules, techniques, or methods. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and may be made.

While the above detailed description has shown, described, and pointed out the fundamental novel features of the disclosure as applied to various implementations, it will be understood that various omissions, substitutions, and changes in the form and details of the system illustrated may be made by those skilled in the art. In addition, the order of method steps are not implied by the order they appear in the claims.

In the foregoing description, numerous details are set forth to provide an understanding of the subject disclosed herein. However, implementations may be practiced without some of these details. Other implementations may include modifications and variations from the details discussed above. It is intended that the appended claims limit solely the scope of the present application.

## Claims

1. A method at a computing device (910) for validating an application, comprising:
enhancing a manifest of the application, the manifest of the application comprising a node path name corresponding to a required signal by the application, wherein enhancing the manifest comprises:
searching (720, 820), in a reference signal catalog (520) for a unique identifier corresponding to the node path name, wherein the unique identifier is unique for a combination of node path name and semantic information, wherein the application is developed based on the reference signal catalog (520); and
adding (730), into an enhanced manifest (540, 610), the node path names and the unique identifier;
validating the enhanced manifest (540, 610) against a second signal catalog (620), wherein the validating comprises:
searching (750, 830), in the second signal catalog (620), for a second unique identifier corresponding to the node path name;
reporting (760, 860) whether the second unique identifier is the same as the unique identifier, different from the unique identifier, or missing from the second signal catalog (620); and
upon determining that the second unique identifier is the same as the unique identifier, installing (780, 880) the application on a vehicle, or
upon determining that the second unique identifier is different from the unique identifier, or missing from the second signal catalog (620), modifying the application prior to installing the application on the vehicle.

2. The method of claim 1, wherein the vehicle has the second signal catalog (620) installed thereon.

3. The method of claim 1 or 2, further comprising, prior to the enhancing, computing (840, 850) a respective unique identifier for each respective node path name in the reference signal catalog (520) and the second signal catalog (620).

4. The method of claim 3, wherein the respective unique identifier is computed as a hash of the respective node path name and semantic information of the respective node path name.

5. The method of claim 4, wherein the hash is a 64-bit hash.

6. The method of any one of claims 1 to 5, wherein the manifest further comprises a second node path name corresponding to an optional signal not required by the application.

7. A computing device (910) for validating an application, comprising:
a communication subsystem (920);
a processor (930);
wherein the communication subsystem (920) and the processor (930) cooperate to perform the method of any one of claims 1 to 6.

8. A computer readable medium having stored thereon executable code for execution by a processor (930) of a computing device (910), the executable code comprising instructions for performing the method of any one of claims 1 to 6.

## Patentansprüche

1. Verfahren an einer Rechenvorrichtung (910) zum Validieren einer Anwendung, mit:
Verbessern eines Manifests der Anwendung, wobei das Manifest der Anwendung einen Knotenpfadnamen aufweist, der einem von der Anwendung benötigten Signal entspricht, wobei das Verbessern des Manifests Folgendes aufweist:
Suchen (720, 820) in einem Referenzsignalkatalog (520) nach einer eindeutigen Kennung, die dem Knotenpfadnamen entspricht, wobei die eindeutige Kennung für eine Kombination aus Knotenpfadnamen und semantischer Information eindeutig ist, wobei die Anwendung auf der Grundlage von dem Referenzsignalkatalog (520) entwickelt wird; und
Hinzufügen (730) der Knotenpfadnamen und der eindeutigen Kennung in ein verbessertes Manifest (540, 610);
Validieren des verbesserten Manifests (540, 610) gegenüber einem zweiten Signalkatalog (620), wobei das Validieren Folgendes aufweist:
Suchen (750, 830) in dem zweiten Signalkatalog (620) nach einer zweiten eindeutigen Kennung, die dem Knotenpfadnamen entspricht;
Berichten (760, 860), ob die zweite eindeutige Kennung die gleiche wie die eindeutige Kennung ist, sich von der eindeutigen Kennung unterscheidet oder in dem zweiten Signalkatalog (620) fehlt; und
bei einem Bestimmen, dass die zweite eindeutige Kennung die gleiche wie die eindeutige Kennung ist, Installieren (780, 880) der Anwendung in einem Fahrzeug, oder
bei einem Bestimmen, dass die zweite eindeutige Kennung sich von der eindeutigen Kennung unterscheidet oder in dem zweiten Signalkatalog (620) fehlt, Modifizieren der Anwendung vor einem Installieren der Anwendung in dem Fahrzeug.

2. Verfahren nach Anspruch 1, wobei in dem Fahrzeug der zweite Signalkatalog (620) installiert ist.

3. Verfahren nach Anspruch 1 oder 2, ferner mit einem Berechnen (840, 850) einer jeweiligen eindeutigen Kennung für jeden jeweiligen Knotenpfadnamen in dem Referenzsignalkatalog (520) und dem zweiten Signalkatalog (620) vor dem Verbessern.

4. Verfahren nach Anspruch 3, wobei die jeweilige eindeutige Kennung als ein Hash des jeweiligen Knotenpfadnamens und der semantischen Information des jeweiligen Knotenpfadnamens berechnet wird.

5. Verfahren nach Anspruch 4, wobei der Hash ein 64-Bit-Hash ist.

6. Verfahren nach einem der Ansprüche 1 bis 5, wobei das Manifest ferner einen zweiten Knotenpfadnamen aufweist, der einem optionalen Signal entspricht, das von der Anwendung nicht benötigt wird.

7. Rechenvorrichtung (910) zum Validieren einer Anwendung, mit:
einem Kommunikationsteilsystem (920);
einem Prozessor (930);
wobei das Kommunikationsteilsystem (920) und der Prozessor (930) zusammenwirken, um das Verfahren nach einem der Ansprüche 1 bis 6 durchzuführen.

8. Von einem Computer lesbares Medium, auf dem ausführbarer Code zur Ausführung durch einen Prozessor (930) einer Rechenvorrichtung (910) gespeichert ist, wobei der ausführbare Code Anweisungen zum Durchführen des Verfahrens nach einem der Ansprüche 1 bis 6 aufweist.

## Revendications

1. Procédé au niveau d'un dispositif informatique (910) pour valider une application, comprenant :
l'amélioration d'un manifeste de l'application, le manifeste de l'application comprenant un nom de chemin de nœud correspondant à un signal requis par l'application, dans lequel l'amélioration du manifeste comprend :
la recherche (720, 820), dans un catalogue de signaux de référence (520), d'un identifiant unique correspondant au nom de chemin de nœud, dans lequel l'identifiant unique est unique pour une combinaison de nom de chemin de nœud et d'informations sémantiques, dans lequel l'application est développée sur la base du catalogue de signaux de référence (520) ; et
l'ajout (730), dans un manifeste amélioré (540, 610), des noms de chemin de nœud et de l'identifiant unique ;
la validation du manifeste amélioré (540, 610) par rapport à un second catalogue de signaux (620), dans lequel la validation comprend :
la recherche (750, 830), dans le second catalogue de signaux (620), d'un second identifiant unique correspondant au nom de chemin de nœud ;
le rapport (760, 860) si le second identifiant unique est le même que l'identifiant unique, différent de l'identifiant unique, ou manquant du second catalogue de signaux (620) ; et
lors de la détermination que le second identifiant unique est le même que l'identifiant unique, l'installation (780, 880) de l'application sur un véhicule, ou
lors de la détermination que le second identifiant unique est différent de l'identifiant unique, ou manquant du second catalogue de signaux (620), la modification de l'application avant l'installation de l'application sur le véhicule.

2. Procédé selon la revendication 1, dans lequel le véhicule a le second catalogue de signaux (620) installé sur celui-ci.

3. Procédé selon la revendication 1 ou 2, comprenant en outre, avant l'amélioration, le calcul (840, 850) d'un identifiant unique respectif pour chaque nom de chemin de nœud respectif dans le catalogue de signaux de référence (520) et le second catalogue de signaux (620).

4. Procédé selon la revendication 3, dans lequel l'identifiant unique respectif est calculé en tant que hachage du nom de chemin de nœud respectif et d'informations sémantiques du nom de chemin de nœud respectif.

5. Procédé selon la revendication 4, dans lequel le hachage est un hachage à 64 bits.

6. Procédé selon l'une quelconque des revendications 1 à 5, dans lequel le manifeste comprend en outre un second nom de chemin de nœud correspondant à un signal facultatif non requis par l'application.

7. Dispositif informatique (910) pour valider une application, comprenant :
un sous-système de communication (920) ;
un processeur (930) ;
dans lequel le sous-système de communication (920) et le processeur (930) coopèrent pour réaliser le procédé selon l'une quelconque des revendications 1 à 6.

8. Support lisible par ordinateur sur lequel est stocké un code exécutable pour une exécution par un processeur (930) d'un dispositif informatique (910), le code exécutable comprenant des instructions pour réaliser le procédé selon l'une quelconque des revendications 1 à 6.
